# EUROPÄISCHE PATENTSCHRIFT

(11) **EP 1 778 953 B1**
(45) Veröffentlichungstag und Bekanntmachung des Hinweises auf die Patenterteilung: **05.06.2013**
(21) Anmeldenummer: 05767703.1
(22) Anmeldetag: 10.08.2005
(51) Int. Cl.: F01D 25/00

(54) **REINIGUNGSVORRICHTUNG EINER ABGASTURBINE**
EXHAUST TURBINE CLEANING DEVICE
DISPOSITIF DE NETTOYAGE DE TURBINE

(30) Priorität: 16.08.2004 EP 04405513
(43) Veröffentlichungstag der Anmeldung: 02.05.2007
(73) Patentinhaber: ABB Turbo Systems AG, 5400 Baden (CH)
(72) Erfinder: SCHELLENBERG, Peter, CH-5408 Ennetbaden (CH); BEHRENDT, Detlef, 79790 Rheinheim (DE); BÄTTIG, Josef, CH-5704 Egliswil (CH); JUNG, Michael, 79761 Waldshut-Tiengen (DE); MUELLER, Ferdinand, 79774 Albbruck-Buch (DE)
(74) Vertreter: ABB Patent Attorneys
(86) Internationale Anmeldenummer: PCT/CH2005/000465
(87) Internationale Veröffentlichungsnummer: WO 2006/017952

(56) Entgegenhaltungen:
- EP-A- 0 848 150
- DE-A- 2 008 503
- DE-A- 19 549 142
- GB-A- 796 269

## Beschreibung

### Technisches Gebiet

Die Erfindung bezieht sich auf das Gebiet der Abgasturbinen für Verbrennungsmotoren. Sie betrifft eine Abgasturbine mit einer Reinigungsvorrichtung gemäss dem Oberbegriff des Patentanspruchs 1.

### Stand der Technik

Abgasturbinen, insbesondere in Abgasturboladern, werden in Verbindung mit einem Verbrennungsmotor verwendet. Das Abgas aus dem Verbrennungsmotor wird als Antriebsmittel zum antreiben des Turbinenrades benutzt. Das Turbinenrad ist durch eine Welle mit dem Verdichterrad verbunden mit welchem die Ansaugluft, die dem Verbrennungsmotor zugeführt wird, komprimiert wird. Das auf die Laufschaufeln der Abgasturbine geführte Abgas enthält Verunreinigungen, welche durch unvollständige Verbrennung und durch Kraftstoffverunreinigungen verursacht werden. Die Menge an Verunreinigungen, die der Verbrennungsmotor mit dem Abgas abgibt, ist stark vom verwendeten Kraftstoff abhängig. Wird ein schmutziger Kraftstoff verwendet, beispielsweise schweres Dieselöl, dann können beträchtliche Mengen an Verunreinigungen mit dem Abgas abgegeben werden.

Die Verunreinigungen im Abgas führen zu Ablagerungen auf den Turbinenschaufeln und insbesondere den Leitelementen (Leitschaufeln) der Leitvorrichtung (Düsenring), welche den Turbinenschaufeln im Strömungskanal vorgeschalteten sind.

Um einen dauerhaft störungsfreien Betrieb bei voller Leistungsfähigkeit gewährleisten zu können, müssen die verunreinigten Teile, d.h. die Turbinenschaufeln und insbesondere die Leitelemente der Leitvorrichtung, in regelmässigen Abständen mittels einer in den Abgasstrom im Strömungskanal eingespritzten Reinigungsflüssigkeit von den Ablagerungen befreit werden.

Aus CH 335 901 und auch EP 0848 150 ist eine Axialturbine mit einer Einrichtung zum Einführen eines Reinigungsmediums in den Schaufelkanal bekannt. Dabei wird ein das Reinigungsmedium führender und mit Austrittsstellen versehener, einen Ring bildender Düsenträger offenbart, welcher radial ausserhalb des Zuströmkanals am Eintritt in den Schaufelkanal der Turbine in Abstand vom Leitschaufelträger angeordnet ist. Der Abstand zum Leitschaufelträger sowie die radial aussenliegende Anordnung des Düsenträgers sorgen dafür, dass sich keine thermischen Spannungen zwischen dem Düsenträger und dem Leitschaufelträger bilden. Der Düsenträger und die das Reinigungsmedium in den Strömungskanal einführenden Düsen sind zudem mit Abstand von den Leitschaufeln angeordnet, um zu gewährleisten, dass sich das Reinigungsmedium vor dem Auftreffen auf die Leitschaufeln in der Strömung verteilen kann. Diese Beabstandung von den Leitschaufeln kann jedoch dazu führen, dass das Reinigungsmedium in der Strömung zu stark aufgelöst wird und so die Reinigungswirkung eines gebündelten Strahls bei weitem nicht erreicht werden kann. Eine gezielte Reinigung der Leitelemente kann damit nicht erreicht werden.

Eine ähnliche Vorrichtung ist aus DE 2 008 503 bekannt. Wiederum wird eine Reinigungsflüssigkeit mit grossem Abstand von radial ausserhalb des Strömungskanals in die Strömung eingespritzt.

Aus DE 35 15 825 ist eine Vorrichtung zum Reinigen der Turbinenschaufeln eines Abgasturboladers bekannt, bei der mittels Wassereinspritzdüsen Wasser stromaufwärts der Leitelemente in den Abgasstrom eingespritzt wird. Das Wasser wird von einer Hochdruck-Wasserversorgung über eine Wasserleitung zu den einzelnen Wasserinjektoren geleitet, welche dann den geeigneten Strom von Tröpfchen für das Reinigen liefert. Wasserleitung, -injektoren und -einspritzdüsen sind ausserhalb der den Strömungskanal bildenden Gehäuseteile angeordnet und als separate Bauteile realisiert.

Eine weitere Abgasturbine gemäß dem Stand der Technik is aus GB 796, 269 bekannt.

### Kurze Darstellung der Erfindung

Die Aufgabe der Erfindung besteht darin, eine Axialturbine mit einer vereinfachten Reinigungsvorrichtung zu schaffen, mit der eine gleichmässige Wasserverteilung an der Leitvorrichtung der Abgasturbine erreicht wird..

Die Aufgabe wird mit einer Abgasturbine mit den Merkmalen des Patentanspruchs 1 gelöst.

Erfindungsgemäss sind dabei Öffnungen zum Einspritzen einer Reinigungsflüssigkeit im Bereich des Strömungskanals in Strömungsrichtung unmittelbar vor den Leitelementen der Leitvorrichtung angeordnet, wobei die Öffnungen auf der radial innenliegenden Seite des ringförmigen Strömungskanals angeordnet sind.

Dank der Einspritzung von der radial innern Seite kommt es zu einer verbesserten Verteilung der Reinigungsflüssigkeit entlang der radialen Höhe der Leitelemente. Die von den weiter stromabwärts schnell rotierenden Turbinenschaufeln angesäugte, bereits im Bereich vor der Leitvorrichtung eine radial nach aussen gerichtete Komponente aufweisende Strömung führt die von radial innen eingespritzte Reinigungsflüssigkeit auf die Leitelemente.

Zudem kann bei einer Einspritzung von radial innen her die Zuführung der Reinigungsflüssigkeit zentral im Verlängerungsbereich der Turbinenwelle erfolgen. Besonders vorteilhaft wird die Einspritzung von radial innen bei kalottenfreien Abgaszuführgehäusen neuerer Generation angewandt. Bei solchen Gehäusen geht der Strömungskanal aus einem kreisförmigen Querschnitt des Abgaszuführrohrs ohne konzentrische, kalottenförmige Innenwand direkt in einen ringförmigen Strömungskanal über. Der Bereich in der Verlängerung der Turbinenachse ist frei zugänglich.

Zudem werden bei der Einspritzung von radial innen her allgemein keine aufwändig zu verlegende Rohre im radial äusseren Bereich des Turbinengehäuses benötigt, welche bezüglich der Gehäuseisolation zu Isolationsverlusten führen könnten. Jedes Element im Bereich der Isolation kann als Wärmebrücke unerwünschterweise Hitze aus dem Innenbereich der Turbine nach aussen leiten.

Zur Verteilung der Reinigungsflüssigkeit von der zentralen Zuführung entlang des Umfangs des Strömungskanalrings sind die Öffnungen mit einem umlaufenden Hohlraum für die Reinigungsflüssigkeit verbunden.

Mit dem rotationssymmetrisch um die Rotationsachse der Abgasturbine angeordneten Hohlraum wird die Reinigungsflüssigkeit gleichmässig auf die gesamte Leitvorrichtung verteilt. Mit den unmittelbar vor oder auf gleicher Höhe mit der Leitvorrichtung angeordneten Öffnungen zum Einspritzen der Reinigungsflüssigkeit wird die Reinigungsflüssigkeit direkt auf die der Verschmutzung am stärksten ausgesetzten Leitelemente gerichtet, was eine wirkungsvollere Reinigung ermöglicht. Zudem wird das umliegende, den Strömungskanal begrenzende Turbinengehäuse thermisch weniger stark belastet, wenn die relativ kalte Reinigungsflüssigkeit nicht oder nur in geringem Ausmass mit den heissen Gehäusewänden in Berührung kommt.

Die Einspritzung erfolgt vorteilhafterweise in axialer und/ oder in Umlaufrichtung im Bereich der Staustromlinie möglichst nahe an dem eigentlichen Staustrompunkt. Damit kann der Einspritzdruck verringert werden, da die Reinigungsflüssigkeit in der gestauten Strömung gegen einen geringeren Strömungswiderstand eingespritzt wird.

Weitere Vorteile ergeben sich aus den abhängigen Ansprüchen.

### Kurze Beschreibung der Zeichnungen

Nachfolgend sind verschiedene Ausführungsformen der erfindungsgemässen Reinigungsvorrichtung anhand von Figuren genauer erläutert. Hierbei zeigt:
- Fig. 1: eine erste Ausführungsform der erfindungsgemässen Reinigungsvorrichtung mit einem radial innenliegenden Hohlraum,
- Fig. 2: eine zweite Ausführungsform der erfindungsgemässen Reinigungsvorrichtung mit einem in der Leitvorrichtung integrierten Hohlraum,
- Fig. 3: eine dritte Ausführungsform der erfindungsgemässen Reinigungsvorrichtung mit einem zentral angeordneten Hohlraum und Zuleitungsröhrchen zu den Öffnungen,
- Fig. 4: eine erste Variante einer vierten Ausführungsform der erfindungsgemässen Reinigungsvorrichtung mit einem zentral angeordneten Hohlraum und zwischen zwei Scheiben ausgebildeten Zuleitungskanälen zu den Öffnungen,
- Fig. 5 bis 7: detailliertere Darstellungen einer zweiten Variante der vierten Ausführungsform nach Fig. 4, und
- Fig. 8: eine schematische Darstellung der Strömungsverhältnisse im Bereich der Leitvorrichtung.

### Weg zur Ausführung der Erfindung.

Die erfindungsgemässe Reinigungsvorrichtung umfasst einen zylinder- oder ringförmig um die Zentralachse der Abgasturbine angeordneten Hohlraum und mit diesem Hohlraum direkt oder über Zuleitungen verbundene Öffnungen, welche in den Strömungskanal münden. Der Hohlraum ist über eine Zuleitung mit einer Pumpe verbunden. Mit dieser wird die Reinigungsflüssigkeit (Wasser, allenfalls mit einem die Reinigungswirkung verstärkenden Zusatz versehen) mit hohem Druck (bis zu 40 bar) in den Hohlraum und durch die Öffnungen in den Strömungskanal gepumpt. Die Druckverteilung im Hohlraum und die Verteilung der Öffnungen entlang des Umfangs des Strömungskanals sorgen für eine gleichmässige Verteilung der Reinigungsflüssigkeit und somit eine gleichmässige Reinigung der Leitvorrichtung.

Der Hohlraum kann integral in einem den Strömungskanal begrenzenden Gehäuseteil, oder thermisch entkoppelt in einem zusätzlichen, separaten, ebenfalls zumindest teilweise den Strömungskanal begrenzenden Bauteil, einem Hohlring, ausgebildet sein. Ist der Hohlraum in einem der bei herkömmlichen Abgasturbinen vorhandenen Gehäuseteile angeordnet, hat dies den Vorteil, dass für die Reinigung nicht ein zusätzliches Bauteil vorgesehen werden muss. Andererseits kann ein separates Bauteil in einer bestehenden Abgasturbine nachgerüstet bzw. im Falle übermässiger Abnützung oder eines Defekts einfach ersetzt werden.

Da die Reinigungsflüssigkeit in Strömungsrichtung des Abgasstromes stromauf direkt vor oder auf der Höhe der Leitvorrichtung (Düsenring) in den Strömungskanal eingespritzt wird, kann verhindert werden, dass zuviel der relativ kalten Reinigungsflüssigkeit in Berührung mit den heissen, den Strömungskanal mehrheitlich begrenzenden Turbinengehäuseteilen kommt. Der die Lebensdauer der Gehäuseteile in negativer Weise beeinflussende Kälteschock beim Reinigen der Leitvorrichtung kann somit vermieden werden. Dafür kann es vorkommen, dass sich die Reinigungsflüssigkeit bis zum Auftreffen auf die der Strömung ausgesetzten Oberflächen der Leitelemente (Leitschaufeln) der Leitvorrichtung nicht gleichmässig in der Strömung verteilt. Daher ist es vorteilhaft, wenn für jedes der Leitelemente mindestens eine Öffnung vorhanden ist, durch welche die Reinigungsflüssigkeit auf das jeweilige Leitelement gespritzt wird.

Öffnungen, Hohlraum und gegebenenfalls die Zuleitungen vom Hohlraum zu den Öffnungen können auch durch zwei- oder mehrteilige Bauteile gebildet werden.

Beispielsweise kann ein scheibenförmiges, flaches Element derart mit einem T-Scheibenelement mit einer rohrförmigen Zuleitung im Zentrum verbunden werden, dass zwischen dem Element und der T-Scheibe ein zentraler Hohlraum und ein umlaufender, radial nach aussen führender Spalt oder aber bei einer entsprechenden Oberflächenprofilierung entweder des flachen Elements oder der T-Scheibe kanalförmige Zuleitungen an den radial äusseren Rand gebildet werden. Durch den umlaufenden Spalt oder die Öffnungen am Ende der Zuführkanäle wird wiederum die Reinigungsflüssigkeit in den Strömungskanal gespritzt.

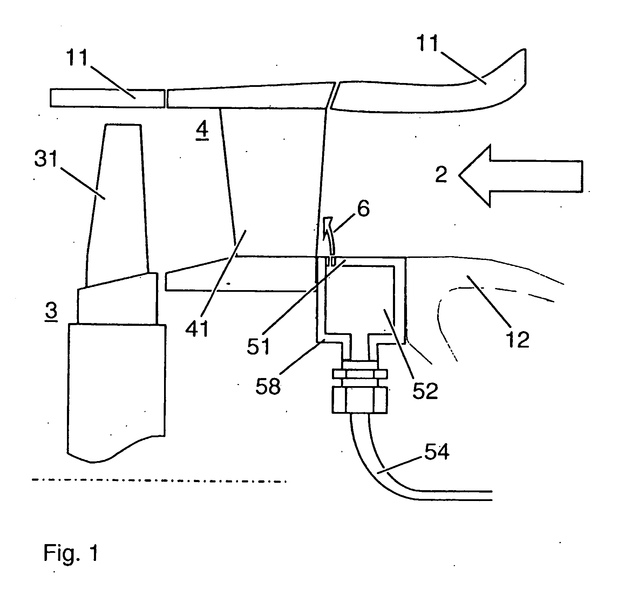

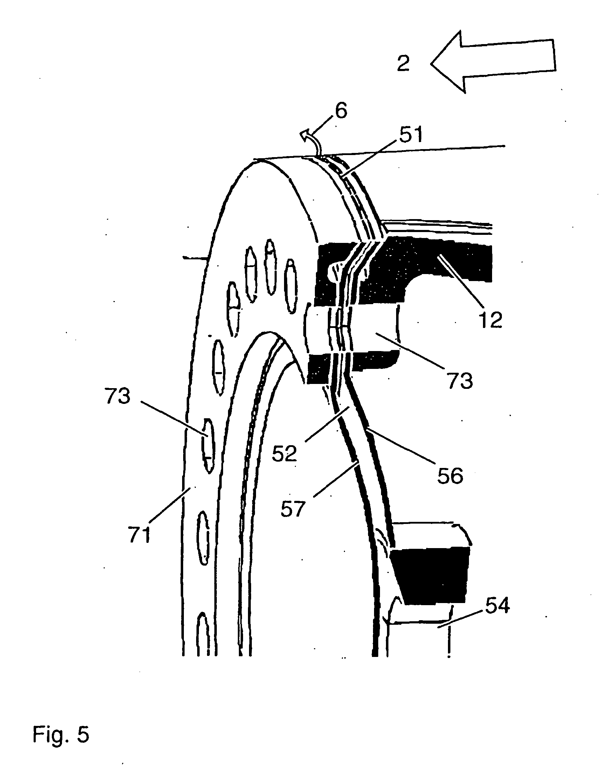

Die Figuren 1 bis 7 zeigen schematisch einen entlang der Rotationsachse (gestrichpunktete Linie) des Turbinenrads 3 geführten Schnitt durch eine Abgasturbine mit einer jeweils unterschiedlichen Ausführungsform der erfindungsgemässen Reinigungsvorrichtung. Die Figuren zeigen den Bereich des Strömungskanals 2, in welchem das Abgas in Pfeilrichtung über die Leitvorrichtung (Düsenring) 4 auf die Laufschaufeln 31 des Turbinenrades geführt wird. Andeutungsweise sind radial aussenliegende Teile 11 und radial innenliegenden Teile 12 des Turbinengehäuses dargestellt.

Die erste Ausführungsform der erfindungsgemässen Reinigungsvorrichtung gemäss Fig. 1 umfasst einen radial innerhalb des Strömungskanals 2 angeordneten Hohlraum 52 zur Aufnahme der Reinigungsflüssigkeit. Der Hohlraum ist rotationssymmetrisch um die Achse des Turbinenrades angeordnet und kann, wie in der Figur dargestellt, in einem separaten Bauteil, einem Hohlring 58, ausgebildet, oder aber integral in einem Turbinengehäuseteil 12 eingeschlossen sein. Vom Hohlraum 52 ausgehend sind die Öffnungen 51 vorgesehen, durch welche die Reinigungsflüssigkeit 6 in den Strömungskanal 2 eingespritzt werden kann. Der Hohlring 58 ist über eine oder mehrere Zuleitungen 54 mit einer Pumpe für die Reinigungsflüssigkeit verbunden.

Beim Reinigen der Leitvorrichtung wird die Reinigungsflüssigkeit mit hohem Druck über die Zuleitungen 54 in den Hohlraum 52 gepumpt. Das Reinigungsmittel verteilt sich im Hohlraum, füllt ihn und tritt dann über die Öffnungen 51 in den Strömungskanal 2 ein. Über den Druck sowie über Form, Grösse und Ausrichtung der Öffnungen lässt sich einstellen, wie die Reinigungsflüssigkeit in den Strömungskanal eingespritzt werden soll. Wie bereits erwähnt wird die Reinigungsflüssigkeit dank der erfindungsgemässen Anordnung der Öffnungen unmittelbar stromauf der Leitvorrichtung hauptsächlich auf die Leitvorrichtung treffen und nicht mit den weiter Stromaufwärts den Strömungskanal begrenzenden Gehäuseteile in Berührung kommen.

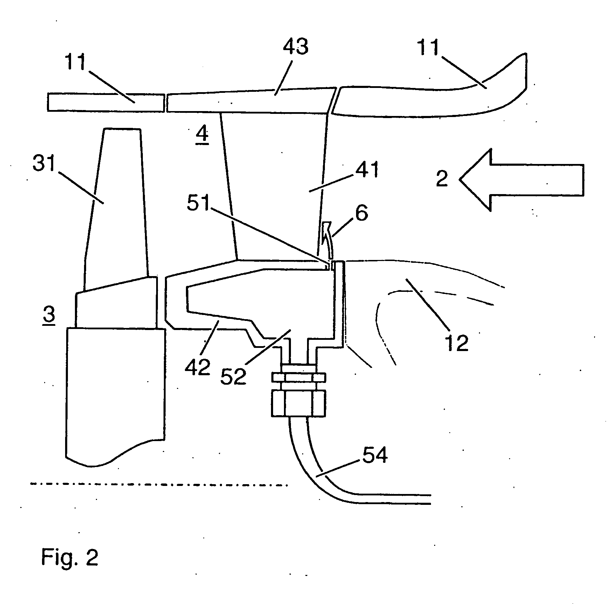

Bei der zweiten Ausführungsform der erfindungsgemässen Reinigungsvorrichtung gemäss Fig. 2 ist der Hohlraum 52 zur Aufnahme der Reinigungsflüssigkeit in einem Gehäuseteil der Leitvorrichtung angeordnet. Die dargestellte Leitvorrichtung (Düsenring) umfasst zwei ringförmige Gehäuseteile 42 und 43. Zwischen diesen beiden Gehäuseteilen sind die mehreren Leitelemente 41 (Leitschaufeln) angeordnet. Alternativ kann die Leitvorrichtung auch nur aus einem Gehäuseteil mit daran befestigten Leitelementen gebildet sein.

Diese zweite Ausführungsform der erfindungsgemässen Reinigungsvorrichtung ist durch einen sehr einfachen und kompakten Aufbau gekennzeichnet und ermöglicht auf einfachste Art eine absolut gleichmässige Wasserverteilung. Zudem eignet sich diese dritte Ausführungsform ganz besonders gut zur Nachrüstung bestehender Abgasturbinen. Anstelle der bisherigen Leitvorrichtung wird einfach die erfindungsgemäss um einen Hohlraum mit Öffnungen zum Strömungskanal hin erweiterte Leitvorrichtung eingesetzt. Je nach Bedarf und Zuführmöglichkeit für die Reinigungsflüssigkeit kann dabei der Hohlraum im radial innenliegenden Gehäuseteil oder im radial aussenliegenden Gehäuseteil der Leitvorrichtung oder gär in beiden integriert sein.

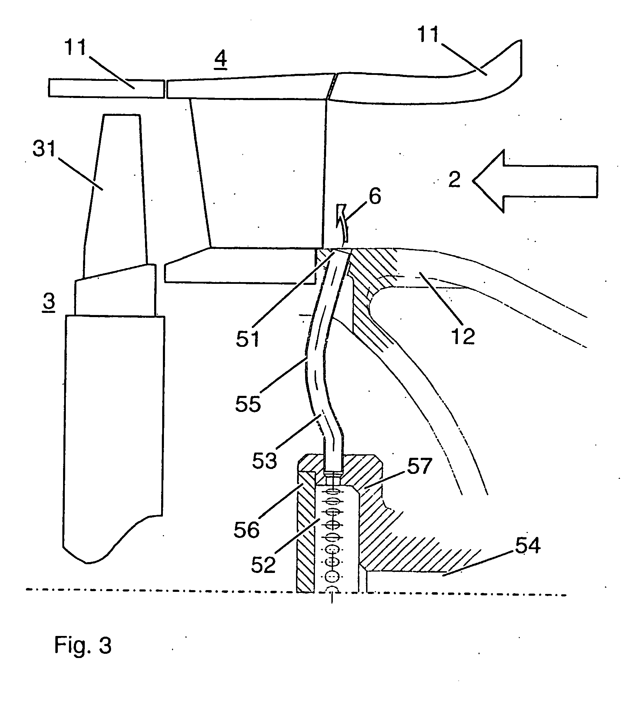

Bei der dritten Ausführungsform der erfindungsgemässen Reinigungsvorrichtung gemäss Fig. 3 ist der Hohlraum 52 zur Aufnahme der Reinigungsflüssigkeit zentral und mit einigem radialen Abstand zum Strömungskanal angeordnet. Die Reinigungsflüssigkeit wird über Zuleitungen 53 in einzelnen Röhrchen 55 in den Strömungskanal 2 geleitet. Der Hohlraum 52 wird durch ein Hohlraumgefäss 57 gebildet, welches mit einem Deckel 56 verschlossen ist und über einen Anschluss zum Zuführen der Reinigungsflüssigkeit in den Hohlraum und über mehrere Öffnungen zum Anschliessen der Röhrchen verfügt.

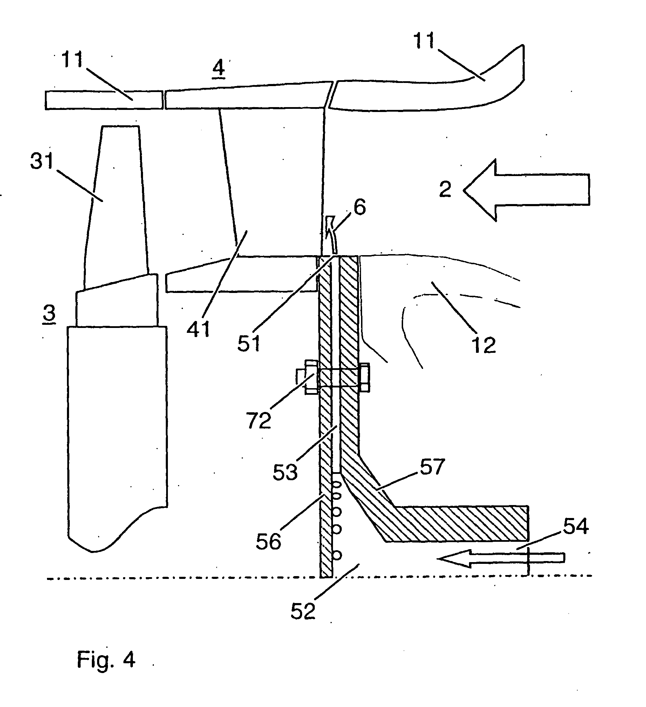

Bei der vierten Ausführungsform der erfindungsgemässen Reinigungsvorrichtung gemäss der Figuren 4 bis 7 ist der Hohlraum 52 zur Aufnahme der Reinigungsflüssigkeit wiederum zentral und mit einigem radialen Abstand zum Strömungskanal angeordnet. Der Hohlraum 52 und die kanalartigen Zuleitungen 53 zu den Öffnungen 51 sind zwischen zwei Elementen 56 und 57 gebildet, welche mittels Befestigungsmitteln oder auf andere Weise zusammengehalten werden.

In der ersten Variante gemäss Fig. 4 sind die Elemente im wesentlichen scheibenförmig, wobei es sich beim einen Element 56 um eine Art Deckel für das andere, T-förmige Element 57 handelt. Alternativ können die Elemente zumindest teilweise schräg, beispielsweise konisch, ausgebildet sein. Das T-Element 54 verfügt über einen Anschluss für die Reinigungsflüssigkeitszuführung 54. Die Zuleitungen 53 sind durch eine Profilierung der Oberfläche von einem oder beiden Elementen geformt.

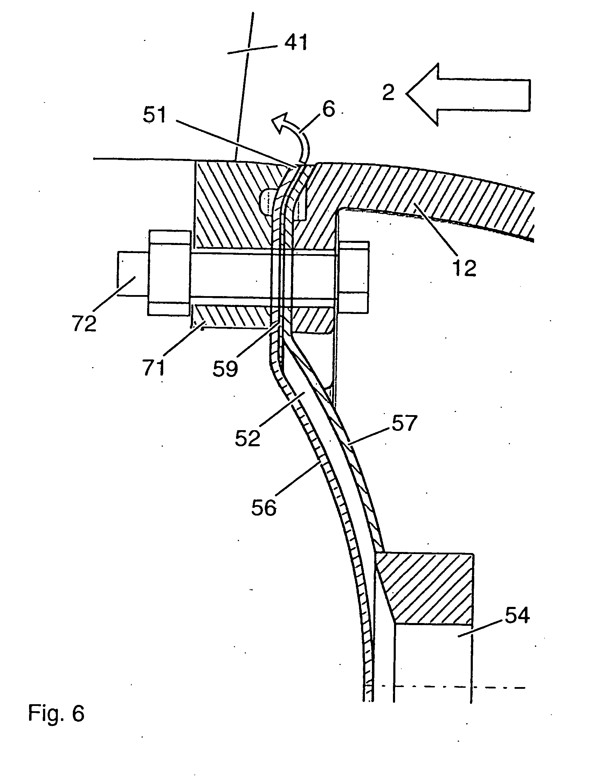

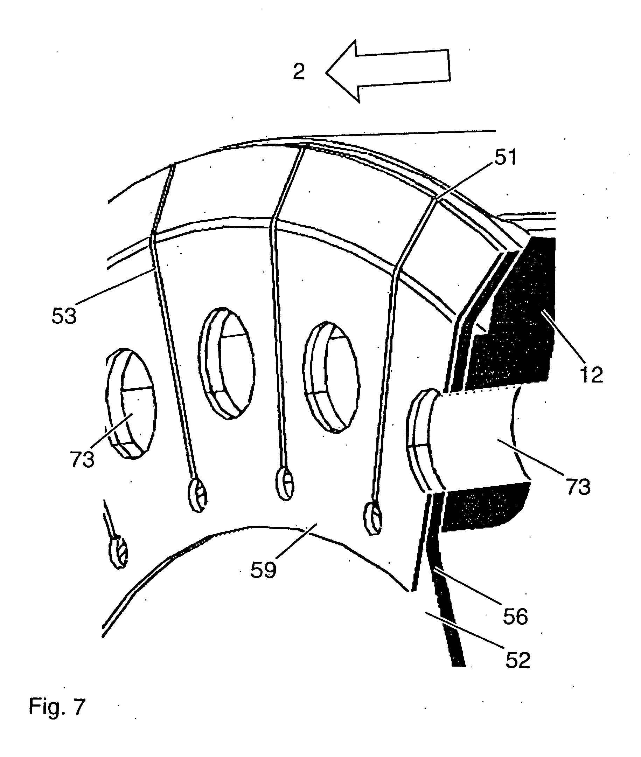

In der zweiten Variante werden die Zuleitungskanäle 53 vom Hohlraum 52 zu den Öffnungen 51 durch ein zwischen den beiden Elementen 56 und 57 angeordnetes, mit Nuten versehenes Blech 59 gebildet. In der in den Figuren 6, 7 und 8 dargestellten Variante ist das Nuten-Blech im radial äusseren Bereich der beiden Elemente 56 und 57 zwischen den beiden Elementen eingeklemmt. Die Klemmung wird durch ein mittels mehrere Schrauben oder anderen Befestigungsmittel 72 durch die vorgesehenen Befestigungslöcher 73 an einem benachbarten Gehäuseteil 12 befestigten Befestigungsring 71 bewirkt. Wie aus Fig. 7 ersichtlich ist, reicht das Nuten-Blech und die darin eingelassenen, radial nach aussen laufenden Nuten zumindest teilweise in den zwischen den Elementen 56 und 57 gebildeten Hohlraum 59 hinein. Dadurch kann die Reinigungsflüssigkeit aus dem Hohlraum in die Nuten eindringen und bis zum den am radial äusseren Rand am Ende der Nuten angeordneten Öffnungen zum Strömungskanals gelangen. Um das Eindringen der Reinigungsflüssigkeit zu vereinfachen, können die Nuten, wie dargestellt, in dem in den Hohlraum hineinreichenden Bereich ausgeweitet sein. Um den gewünschten Einspritzwinkel zu erzielen, können die Elemente 56 und 57 sowie das zwischenliegende Nuten-Blech 59 im radial äusseren Bereich gebogen oder geknickt sein.

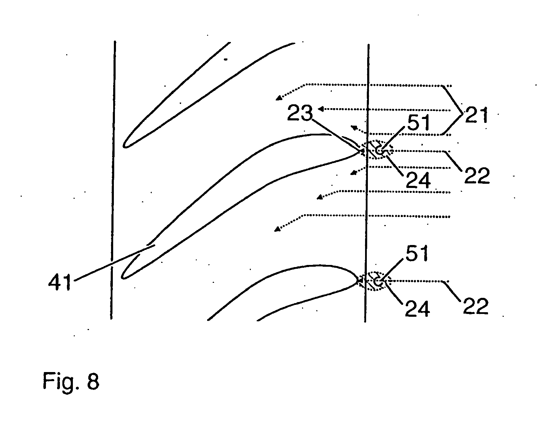

Fig. 8 zeigt schematisch die Strömungsverhältnisse im Bereich der Leitelemente 41. Erfindungsgemäss werden die Öffnungen 51 zum Einspritzen der Reinigungsflüssigkeit in einem sogenannten Staustrombereich angeordnet, d.h. in demjenigen Bereich vor dem Leitelement, in welchem die Strömung durch das Leitelement lokal gestaut ist und dementsprechend abgebremst wird. Der Staustrombereich 24 liegt in Strömungsrichtung vor dem eigentlichen Staustrompunkt 23. Die Anordnung der Öffnungen im Staustrombereich ermöglicht eine Reduktion des Einspritzdrucks, da die eingespritzte Reinigungsflüssigkeit nicht der schnellstströmenden Strömung ausgesetzt ist. Dadurch kommt es zu einer geringeren Ablenkung der Reinigungsflüssigkeit, so dass mit geringerem Druck die Flüssigkeit über die gesamte Höhe der Leitelemente verteilt werden kann.

Um diesen Effekt des Staustrombereichs auszunutzen, sind die Öffnungen 51 vorteilhafterweise jeweils unmittelbar vor dem Staustrompunkt des Leitelements, höchstens aber eine halbe Leitschaufellänge vor dem Staustrompunkt des Leitelements entfernt anzuordnen. In diesem Bereich kann von einer reduzierten Strömungsgeschwindigkeit ausgegangen werden, so dass wie erwähnt der Druck der Einspritzung reduziert werden kann.

In Umfangsrichtung liegen die Öffnungen 51 vorteilhafterweise auf der jeweiligen Staustromlinie 22, derjenigen Strömungslinie also, welche direkt in den Staustrompunkt führt. Damit ist gewährleistet, dass die Flüssigkeit von der Strömung auf beide Seiten des Staustrompunkts und somit auf beide Seiten des Strömungsprofils der Leitelemente befördert wird.

### Bezugszeichenliste

| | |
|---|---|
| 11,12 | Turbinengehäuse |
| 2 | (Abgas-) Strömungskanal |
| 21 | Strömungslinien |
| 22 | Staustromlinie |
| 23 | Staustrompunkt |
| 24 | Staustrombereich |
| 3 | Turbinenrad |
| 31 | Turbinenlaufschaufeln |
| 4 | Leitvorrichtung, Düsenring |
| 41 | Leitelemente, Leitschaufeln |
| 42, 43 | Gehäuseteile der Leitvorrichtung |
| 51 | Einspritzöffnungen |
| 52 | Hohlraum |
| 53 | Zuleitungen zu Öffnungen |
| 54 | Zuleitung zu Hohlraum |
| 55 | Zuleitungsröhrchen |
| 56 | Deckelelement |
| 57 | Hohlraumgefäss, T-Element |
| 58 | Hohlring |
| 59 | Nuten-Blech |
| 6 | Reinigungsflüssigkeit |
| 71 | Befestigungsring |
| 72 | Befestigungsmittel |
| 73 | Befestigungslöcher |

## Patentansprüche

1. Abgasturbine, umfassend ein Gehäuse (11, 12), ein mit Laufschaufeln (31) bestücktes Turbinenrad (3), einen durch das Gehäuse zumindest teilweise begrenzten Abgasströmungskanal (2), mehrere, im Strömungskanal (2) stromauf der Laufschaufeln (31) angeordnete Leitelemente (41) einer Leitvorrichtung (4), sowie eine Vorrichtung zum Reinigen der Abgasturbine, wobei
der Strömungskanal (2) im Bereich der Leitvorrichtung (4) ringförmig ausgebildet ist, die Reinigungsvorrichtung in den Strömungskanal (2) mündende Öffnungen (51) zum Einspritzen der Reinigungsflüssigkeit (6) in den Strömungskanal (2) umfasst,
und
die Öffnungen (51) zum Einspritzen in Strömungsrichtung vor den Leitelementen (41) angeordnet sind,
**dadurch gekennzeichnet, dass**
die Öffnungen (51) zum Einspritzen auf der radial inneren Seite des ringförmigen Strömungskanals (2) angeordnet sind.

2. Abgasturbine nach Anspruch 1, **dadurch gekennzeichnet, dass** ein mit den Öffnungen (51) verbundener Hohlraum (52) für die Verteilung der Reinigungsflüssigkeit (6) auf die und/ oder entlang der Öffnungen (51) vorgesehen ist, wobei der Hohlraum (52) radial innerhalb des ringförmigen Strömungskanals angeordnet ist.

3. Abgasturbine nach Anspruch 2, **dadurch gekennzeichnet, dass** der Hohlraum (52) im wesentlichen koaxial zur Rotationsachse des Turbinenrades (3) angeordnet und im wesentlichen rotationssymmetrisch ausgebildet ist.

4. Abgasturbine nach einem der Ansprüche 2 oder 3, **dadurch gekennzeichnet, dass** die Öffnungen (51) über rohrförmige Zuleitungen (53) mit dem Hohlraum (52) verbunden sind.

5. Abgasturbine nach einem der Ansprüche 2 bis 4, **dadurch gekennzeichnet, dass** eine Zuführleitung (54) zum Zuführen der Reinigungsflüssigkeit (6) zum Hohlraum (52) vorgesehen ist, wobei die Zuführleitung radial innerhalb des ringförmigen Strömungskanals in den Hohlraum mündet.

6. Abgasturbine nach einem Ansprüche 1 bis 5, **dadurch gekennzeichnet, dass** die Reinigungsvorrichtung zumindest einen Hohlring (58) umfasst, dass der Hohlring (58) den Strömungskanal (2) zumindest teilweise begrenzt, und dass die Öffnungen (51) zum Einspritzen der Reinigungsflüssigkeit (6) in den Strömungskanal (2) in die an den Strömungskanal grenzende Seite des Hohlrings (58) eingelassen sind.

7. Abgasturbine nach Anspruch 6, **dadurch gekennzeichnet, dass** die Leitvorrichtung (4) ein ringförmiges Gehäuseteil (42) sowie an dem ringförmigen Gehäuseteil befestigte Leitelemente (41) umfasst, dass in das ringförmige Gehäuseteil (42) ein ringförmiger Hohlraum (52) zur Aufnahme der Reinigungsflüssigkeit (6) eingelassen ist, und dass vom Hohlraum ausgehende Öffnungen (51) zum Spritzen der Reinigungsflüssigkeit (6) aus dem Hohlraum (52) auf die Leitelemente (41) in das ringförmige Gehäuseteil (42) eingelassen sind.

8. Abgasturbine nach einem Ansprüche 1 bis 5, **dadurch gekennzeichnet, dass** die Reinigungsvorrichtung mindestens zwei koaxial angeordnete, den Strömungskanal zumindest teilweise begrenzende Elemente (56, 57, 59) umfasst, welche derart ausgestaltet und miteinander verbunden sind, dass zwischen mindestens zwei der Elemente ein Hohlraum (52) und vom Hohlraum ausgehende Kanäle (53) mit einer oder mehreren in den Strömungskanal (2) mündenden Öffnungen (5.1) geformt sind durch welche die Reinigungsflüssigkeit (6) in den Strömungskanal (2) eingespritzt werden kann.

9. Abgasturbine nach einem der vorangehenden Ansprüche, **dadurch gekennzeichnet, dass** die Öffnungen (51) zum Einspritzen jeweils vor einem Leitelement (41) in einem Staubereich (24) der Strömung angeordnet sind.

10. Abgasturbine nach einem der vorangehenden Ansprüche, **dadurch gekennzeichnet, dass** die Öffnungen (51) zum Einspritzen in Umfangsrichtung im Bereich einer Strömungsstaulinie (22) vor jeweils einem Leitelement (41) angeordnet sind.

11. Abgasturbine nach einem der vorangehenden Ansprüche, **dadurch gekennzeichnet, dass** die Leitvorrichtung (4) mehrere Leitelemente (41) umfasst, und dass jeweils pro Leitelement (41) mindestens eine Öffnung (51) zum Einspritzen der Reinigungsflüssigkeit (6) in den Strömungskanal (2) angeordnet ist.

12. Abgasturbine nach Anspruch 8, **dadurch gekennzeichnet, dass** zwischen den Elementen (56, 57) eine einzige oder einige wenige Öffnungen (51) geformt sind, welche sich schlitzartig entlang des Umfangs des Strömungskanals erstrecken.

13. Abgasturbolader, **gekennzeichnet durch** eine Abgasturbine nach einem der vorangehenden Ansprüche.

## Claims

1. Exhaust turbine, comprising a housing (11, 12), a turbine wheel (3) fitted with rotor blades (31), an exhaust gas flow duct (2) delimited at least partially by the housing, multiple guide elements (41) of a guide device (4) which are arranged upstream of the rotor blades (31) in the flow duct (2), and also a device for cleaning the exhaust turbine, the flow duct (2) being designed in the form of a ring in the region of the guide device (4), the cleaning device comprising orifices (51), issuing into the flow duct (2), for injecting the cleaning fluid (6) into the flow duct (2), and the orifices (51) for the injection being arranged upstream of the guide elements (41) in the flow direction, **characterized in that** the orifices (51) for injection are arranged on the radially inner side of the ring-shaped flow duct (2).

2. Exhaust turbine according to Claim 1, **characterized in that** a cavity (52) connected to the orifices (51) is provided for distributing the cleaning fluid (6) to and/or along the orifices (51), the cavity (52) being arranged radially within the ring-shaped flow duct.

3. Exhaust turbine according to Claim 2, **characterized in that** the cavity (52) is arranged essentially coaxially to the axis of rotation of the turbine wheel (3) and is designed to be substantially rotationally symmetrical.

4. Exhaust turbine according to either one of Claims 2 and 3, **characterized in that** the orifices (51) are connected to the cavity (52) via tubular supply lines (53).

5. Exhaust turbine according to one of Claims 2 to 4, **characterized in that** a delivery line (54) for delivering the cleaning fluid (6) to the cavity (52) is provided, the delivery line issuing to the cavity radially within the ring-shaped flow duct.

6. Exhaust turbine according to one of Claims 1 to 5, **characterized in that** the cleaning device comprises at least one hollow ring (58), **in that** the hollow ring (58) at least partially delimits the flow duct (2), and **in that** the orifices (51) for injecting the cleaning fluid (6) into the flow duct (2) are introduced into that side of the hollow ring (58) which is adjacent to the flow duct.

7. Exhaust turbine according to Claim 6, **characterized in that** the guide device (4) comprises a ring-shaped housing part (42) and guide elements (41) fastened to the ring-shaped housing part, **in that** a ring-shaped cavity (52) for receiving the cleaning fluid (6) is introduced into the ring-shaped housing part (42), and **in that** orifices (51), emanating from the cavity, for spraying the cleaning fluid (6) out of the cavity (52) onto the guide elements (41) are introduced into the ring-shaped housing part (42).

8. Exhaust turbine according to one of Claims 1 to 5, **characterized in that** the cleaning device comprises at least two coaxially arranged elements (56, 57, 59) which at least partially delimit the flow duct and which are configured and connected to one another in such a way that there are formed between at least two of the elements a cavity (52) and ducts (53) emanating from the cavity and having one or more orifices (51) which issue into the flow duct (2) and through which the cleaning fluid (6) can be injected into the flow duct (2).

9. Exhaust turbine according to one of the preceding claims, **characterized in that** the orifices (51) for injection are arranged in each case upstream of a guide element (41) in a stagnation region (24) of the flow.

10. Exhaust turbine according to one of the preceding claims, **characterized in that** the orifices (51) for injection are arranged in the circumferential direction, in the region of a flow stagnation line (22), in each case upstream of a guide element (41).

11. Exhaust turbine according to one of the preceding claims, **characterized in that** the guide device (4) comprises a plurality of guide elements (41), and **in that** at least one orifice (51) for injecting the cleaning fluid (6) into the flow duct (2) is arranged in each case per guide element (41).

12. Exhaust turbine according to Claim 8, **characterized in that** a single orifice (51) or a few orifices (51) extending in a slit-like manner along the circumference of the flow duct is or are formed between the elements (56, 57).

13. Exhaust turbocharger, **characterized by** an exhaust turbine according to one of the preceding claims.

## Revendications

1. Turbine à gaz d'échappement, comprenant un boîtier (11, 12), une roue de turbine (3) munie d'aubes mobiles (31), un canal d'écoulement de gaz d'échappement (2) limité au moins en partie par le boîtier, plusieurs éléments directeurs (41) d'un dispositif directeur (4), disposés dans le canal d'écoulement (2) en amont des aubes mobiles (31), ainsi qu'un dispositif pour nettoyer la turbine à gaz d'échappement,
le canal d'écoulement (2) étant réalisé sous forme annulaire dans la région du dispositif directeur (4), le dispositif de nettoyage comprenant des ouvertures (51) débouchant dans le canal d'écoulement (2) pour l'injection du liquide de nettoyage (6) dans le canal d'écoulement (2), et les ouvertures (51) pour l'injection étant disposées dans la direction d'écoulement avant les éléments directeurs (41),
**caractérisée en ce que**
les ouvertures (51) pour l'injection sont disposées sur le côté radialement interne du canal d'écoulement annulaire (2).

2. Turbine à gaz d'échappement selon la revendication 1, **caractérisée en ce qu'**il est prévu une cavité (52) connectée aux ouvertures (51) pour distribuer le liquide de nettoyage (6) aux et/ou le long des ouvertures (51), la cavité (52) étant disposée radialement à l'intérieur du canal d'écoulement annulaire.

3. Turbine à gaz d'échappement selon la revendication 2, **caractérisée en ce que** la cavité (52) est disposée essentiellement coaxialement à l'axe de rotation de la roue de turbine (3) et est réalisée essentiellement avec une symétrie de révolution.

4. Turbine à gaz d'échappement selon l'une quelconque des revendications 2 ou 3, **caractérisée en ce que** les ouvertures (51) sont connectées à la cavité (52) par le biais de conduites d'amenée de forme tubulaire (53).

5. Turbine à gaz d'échappement selon l'une quelconque des revendications 2 à 4, **caractérisée en ce qu'**il est prévu une conduite d'alimentation (54) pour alimenter le liquide de nettoyage (6) à la cavité (52), la conduite d'alimentation débouchant radialement à l'intérieur du canal d'écoulement annulaire dans la cavité.

6. Turbine à gaz d'échappement selon l'une quelconque des revendications 1 à 5, **caractérisée en ce que** le dispositif de nettoyage comprend au moins un anneau tubulaire (58), **en ce que** l'anneau tubulaire (58) limite au moins en partie le canal d'écoulement (2), et **en ce que** les ouvertures (51) pour l'injection du liquide de nettoyage (6) dans le canal d'écoulement (2) sont pratiquées dans le côté de l'anneau tubulaire (58) adjacent au canal d'écoulement.

7. Turbine à gaz d'échappement selon la revendication 6, **caractérisée en ce que** le dispositif directeur (4) comprend une partie de boîtier annulaire (42) ainsi que des éléments directeurs (41) fixés sur la partie de boîtier annulaire, **en ce que** dans la partie de boîtier annulaire (42) est pratiquée une cavité annulaire (52) pour recevoir le liquide de nettoyage (6), et **en ce que** des ouvertures (51) partant de la cavité, pour l'injection du liquide de nettoyage (6) hors de la cavité (52) vers les éléments directeurs (41) sont pratiquées dans la partie de boîtier annulaire (42).

8. Turbine à gaz d'échappement selon l'une quelconque des revendications 1 à 5, **caractérisée en ce que** le dispositif de nettoyage comprend au moins deux éléments (56, 57, 59) disposés coaxialement, limitant au moins en partie le canal d'écoulement, qui sont configurés et connectés l'un à l'autre de telle sorte qu'entre au moins deux des éléments soient formés une cavité (52) et des canaux (53) partant de la cavité avec une ou plusieurs ouvertures (51) débouchant dans le canal d'écoulement (2), à travers lesquelles le liquide de nettoyage (6) peut être injecté dans le canal d'écoulement (2).

9. Turbine à gaz d'échappement selon l'une quelconque des revendications précédentes, **caractérisée en ce que** les ouvertures (51) pour l'injection sont disposées à chaque fois avant un élément directeur (41) dans une région dynamique (24) de l'écoulement.

10. Turbine à gaz d'échappement selon l'une quelconque des revendications précédentes, **caractérisée en ce que** les ouvertures (51) pour l'injection sont disposées dans la direction périphérique dans la région d'une ligne d'écoulement dynamique (22) avant un élément directeur respectif (41).

11. Turbine à gaz d'échappement selon l'une quelconque des revendications précédentes, **caractérisée en ce que** le dispositif directeur (4) comprend plusieurs éléments directeurs (41) et **en ce qu'**au moins une ouverture (51) pour l'injection de liquide de nettoyage (6) est prévue dans le canal d'écoulement (2) pour chaque élément directeur (41).

12. Turbine à gaz d'échappement selon la revendication 8, **caractérisée en ce qu'**entre les éléments (56, 57) sont formées une unique ou quelques ouvertures (51) qui s'étendent en forme de fentes le long de la périphérie du canal d'écoulement.

13. Turbocompresseur à gaz d'échappement, **caractérisé par** une turbine à gaz d'échappement selon l'une quelconque des revendications précédentes.
